# FASCICULE DE BREVET EUROPEEN

(11) **EP 0 459 925 B1**
(45) Date de publication et mention de la délivrance du brevet: **21.08.1996**
(21) Numéro de dépôt: 91440045.2
(22) Date de dépôt: 31.05.1991
(51) Int. Cl.: G01S 13/56, G08B 13/16, G01S 15/52

(54) **Détecteur volumétrique de mouvement pour la protection, notamment d'automobiles**
Volumetrischer Bewegungsdetektor einer Schutzanlage, insbesondere für Kraftfahrzeuge
Volumetric movement detector for protection, in particular in motor cars

(30) Priorité: 01.06.1990 FR 9007055
(43) Date de publication de la demande: 04.12.1991
(73) Titulaire: ELECTRO UNIVERS DIFFUSION, F-34380 St. Martin de Londres (FR)
(72) Inventeur: Espinadel, Gérard, F-30000 Nimes (FR); Latorre, Jack, F-34730 Prades-Le-Lez (FR)
(74) Mandataire: Dénoyez, Hubert

(56) Documents cités:
- EP-A- 0 026 385
- DE-U- 8 912 983
- GB-A- 2 137 749
- US-A- 4 661 936
- PATENT ABSTRACTS OF JAPAN vol. 012, no. 418 (E-678) 7 Novembre 1988 & JP-A-63 155 653

## Description

La présente invention a pour objet un détecteur volumétrique de mouvement à réglage automatique en fonction du volume surveillé, destiné notamment à la protection d'automobiles, d'appartements, etc...

Les dispositifs actuellement connus pour la protection des véhicules automobiles offrent simultanément deux types de protection :
- la protection périmétrique qui utilise les contacts d'origine des portières, capot moteur, capot de coffre à bagages, toit ouvrant, etc...
- La protection volumétrique qui protège l'espace intérieur de la voiture à l'aide de capteurs généralement mis en place par l'installateur du système de protection. Ces capteurs peuvent être des capteurs infra-rouge, à ultra-son, infra-son ou hyperfréquence.

En général un bon système de protection comporte donc :
- une centrale de commande qui gère les informations fournies par les différents capteurs dont on vient de parler,
- un détecteur volumétrique,
- un avertisseur sonore pour prévenir en cas d'intrusion.

Parmi les détecteurs volumétriques mis en oeuvre à ce jour, le plus couramment utilisé est le détecteur à ultra-sons, qui constitue un système de détection efficace mais qui présente toutefois quelques inconvénients, sa mise en oeuvre impliquant un certain nombre de contraintes, à savoir :
- il est impératif de fermer hermétiquement toutes les glaces des portières et toutes les bouches d'aération du véhicule pour éviter tout mouvement vibratoire dans l'espace protégé et donc tout déclenchement intempestif,
- les parties émetteur et récepteur du système doivent être installées bien en évidence et sans obstacles entre elles, ce qui les rend parfaitement vulnérables (arrachement, obturation...),
- il ne peut en aucun cas être installé sur des véhicules dits "convertibles", par exemple des cabriolets.

Le document DE-U- 8 912 983 décrit un dispositif de surveillance d'un local qui décompose l'écho reçu en une série de valeurs et les compare à un écho type qui est calculé et mémorisé selon une autre série de valeurs, la comparaison de ces deux séries déclenchant l'alarme dès qu'une des valeurs de l'écho perçu diffère sensiblement des valeurs mémorisées.

Toutefois ce dispositif met en oeuvre un calculateur, ce qui rend sa réalisation complexe et onéreuse, et d'autre part l'alarme est déclenchée seulement en fonction d'une différence, qui peut être en plus ou en moins, et pas uniquement en cas de dépassement.

La présente invention a pour but de remédier à ces divers inconvénients en proposant un dispositif qui comporte des moyens de mémorisation d'un signal-seuil défini comme étant le plus faible perçu par un détecteur dans le volume surveillé, et des moyens de traitement de ce signal permettant de fixer un seuil de déclenchement.

Le dispositif objet de la présente invention comporte ainsi un émetteur et un récepteur d'ondes électromagnétiques, lumineuses ou sonores, un démodulateur détectant une variation de fréquence du signal reçu par le récepteur et émettant un signal variant progressivement en fonction de ladite variation de fréquence, un convertisseur analogique-numérique connecté au démodulateur, une mémoire réinscriptible connectée au convertisseur et un comparateur comparant le signal provenant du démodulateur avec le signal-seuil mémorisé dans la mémoire et émettant un signal quand le premier est supérieur au second.

La mémorisation est commandée par l'utilisateur au moment de l'installation du dispositif, en provoquant simultanément un mouvement de faible vitesse dans le volume à surveiller, de manière que le dispositif détecte tous les mouvements de vitesse supérieure à celle du mouvement mémorisé.

Il convient de souligner que le réglage automatique peut être réalisé plusieurs fois, par exemple au cours d'une nouvelle installation du dispositif, .

Plusieurs modes de réalisation du dispositif sont possibles, avec des circuits analogiques ou numériques, ces différents modes entrant dans le cadre de la présente invention.

La présente invention sera mieux comprise à la lecture de la description qui suit et qui se rapporte au dessin annexé, étant bien entendu que cette description ne présente aucun caractère limitatif vis-à-vis de l'invention.

Pour des raisons de clarté, cette description présente l'adaptation de l'invention à des détecteurs volumétriques à effet doppler et à ondes électromagnétiques émises dans le domaine des hyperfréquences.

Dans le dessin annexé :
- la figure 1 représente un schéma de principe d'un mode de réalisation principalement numérique du dispositif selon l'invention.
- la figure 2 représente un schéma de principe d'un mode de réalisation principalement analogique du dispositif selon l'invention.
- la figure 3 représente un circuit électronique permettant de réaliser les deux modes de réalisation du dispositif représentés aux figures 1 et 2.
- la figure 4 représente un schéma d'utilisation du dispositif objet de l'invention dans une centrale d'alarme.

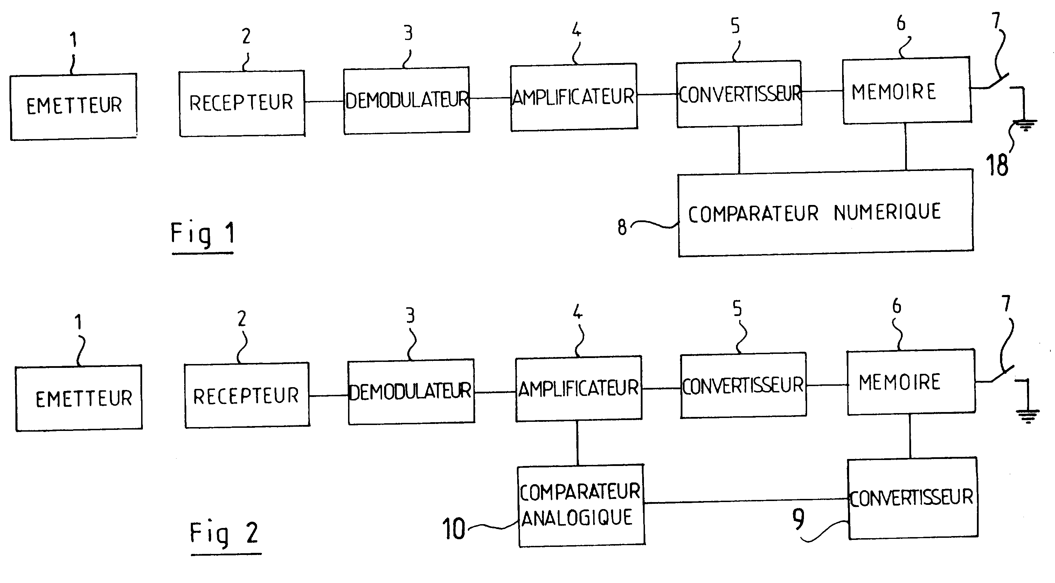

Si on se réfère d'abord à la figure 1, on voit que le dispositif selon l'invention comprend un émetteur 1, un récepteur 2, un démodulateur 3 connecté au récepteur 2, un amplificateur 4 relié au démodulateur 3, un convertisseur analogique-numérique 5 relié à l'amplificateur 4, une mémoire réinscriptible 6 reliée au convertisseur 5 et à un interrupteur 7, un comparateur numérique 8 relié à la mémoire 6 et au convertisseur 5.

Le fonctionnement du dispositif est le suivant : l'émetteur 1 et le récepteur 2 étant adaptés à utiliser les mêmes longueurs d'ondes, un déplacement d'objet dans la sone d'émission et de réception de ces composants provoque, par effet doppler, une variation de la fréquence reçue par le récepteur 2. Le démodulateur 3 extrait cette variation du signal reçu par le récepteur 2 et émet un signal variable en fonction de cette variation de fréquence. L'amplificateur 4 amplifie ce signal qui est ensuite converti en informations numériques par le convertisseur analogique-numérique 5.

Quand l'interrupteur 7 est fermé, la mémoire réinscriptible 6 mémorise le signal numérique correspondant à la variation de fréquence provoquée par le déplacement d'objet.

Quand l'interrupteur 7 est ouvert, la mémoire 6 émet en permanence l'information mémorisée et le comparateur numérique 8 compare le signal provenant du convertisseur 5 avec celui provenant de la mémoire 6. Quand le premier est supérieur au second, le comparateur 8 émet un signal correspondant à la détection souhaitée.

Il est à noter que le démodulateur 3 et l'amplificateur 4 peuvent être intervertis dans le dispositif et que l'amplificateur 4 peut aussi se trouver en sortie du dispositif, après le comparateur 8.

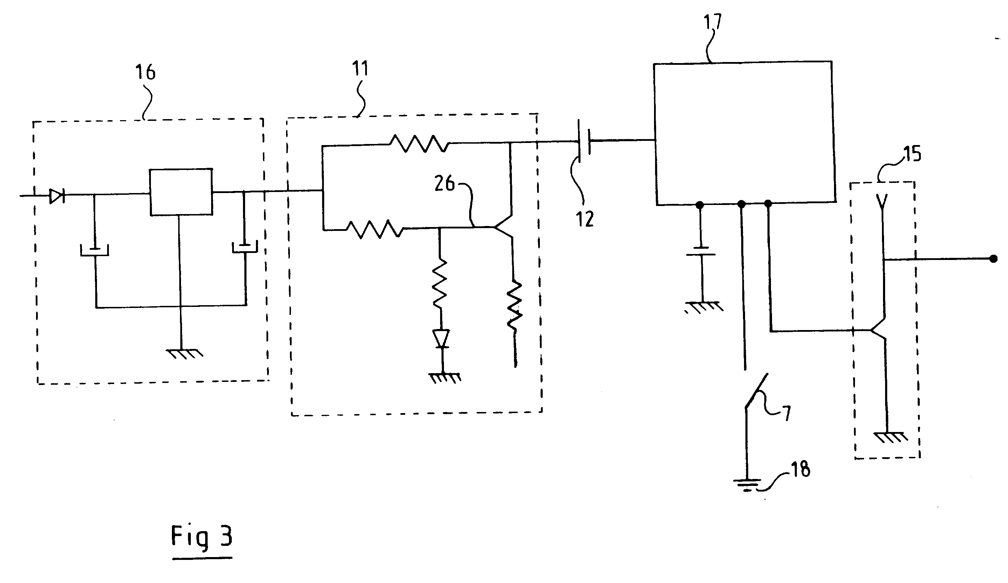

D'autre part l'émetteur 1, le récepteur 2 et le démodulateur 3 peuvent être combinés en un circuit unique, en particulier dans un circuit mettant en résonance le volume surveillé. La figure 3 présente un tel circuit.

Si on se réfère maintenant à la figure 2, on retrouve dans cette figure les éléments présentés en regard de la figure 1, à l'exception du comparateur numérique 8. A la sortie de la mémoire 6 se trouve un convertisseur numérique-analogique 9 connecté d'une part à cette mémoire 6 et d'autre part à un comparateur analogique 10. Ledit comparateur 10 est, par ailleurs, relié à l'amplificateur 4 et compare les signaux provenant de cet amplificateur 4 avec ceux provenant du convertisseur numérique-analogique 9.

Le fonctionnement de ce circuit est identique à celui du circuit présenté en regard de la figure 1, à la différence près que la comparaison s'effectue en analogique et non en numérique.

Si on se réfère à la figure 3, on voit sur cette figure un circuit électronique permettant une application de la présente invention à un circuit de détection de type connu.

Ce circuit électronique comprend un circuit d'alimentation électrique régulée 16, un circuit oscillateur 11, un condensateur de couplage 12, un circuit intégré 17, un interrupteur 7, une masse électrique 18 et un circuit de sortie 15.

Le circuit intégré 17 est préférentiellement du type "ASIC", c'est-à-dire qu'il comporte des sous-ensembles analogiques et des sous-ensembles numériques.

Le circuit intégré 17 incorpore les fonctions de conversion analogique-numérique, de mémorisation et de comparaison présentées en regard des figures 1 et 2, notamment pour les composants 5, 6 et 8.

Le circuit oscillateur 11 réalise les fonctions d'émission, de réception et de démodulation présentées en regard des figures 1 et 2. En particulier, l'antenne émettrice et réceptrice est constituée de la base 26 du transistor. Les variations de fréquence en réception sont amplifiées par le transistor et font varier la charge du condensateur 12.

L'interrupteur 7 est relié à la mémoire incorporée dans le circuit intégré 17 et à une masse électrique 18 de telle manière que la mémorisation s'effectue quand l'interrupteur 7 est fermé.

En fonction du signal donné par le comparateur incorporé au circuit 17, le circuit de sortie 15 fournit une tension positive ou une tension nulle. La tension de sortie est nulle si une détection a été réalisée, c'est-à-dire si le signal amplifié est supérieur au signal-seuil.

Le fonctionnement de ce circuit est identique à celui décrit en regard des figures 1 et 2 et fournit un signal dont la tension est nulle en cas de détection dans le volume surveillé.

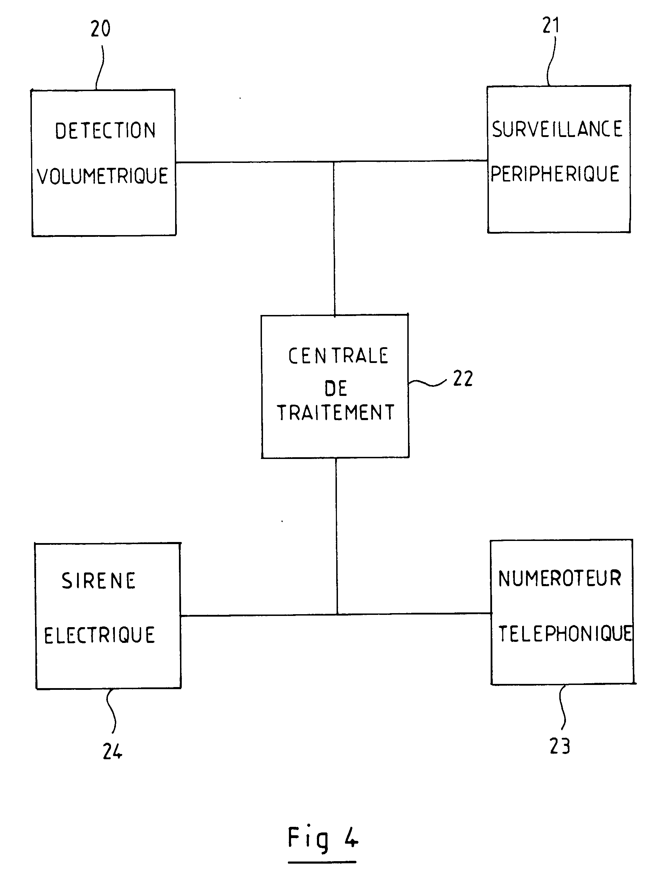

Si on se réfère enfin à la figure 4, on voit sur cette figure le schéma d'une centrale d'alarme à réglage automatique utilisant le dispositif objet de l'invention. Cette centrale d'alarme comprend un circuit de détection volumétrique 20, un circuit de surveillance périphérique 21, une centrale de traitement 22, un numéroteur téléphonique 23 et une sirène électrique 24.

Le circuit de détection volumétrique 20 est tel que représenté en regard de l'une des figures précédentes, et préférentiellement en regard de la figure 3. Le circuit de surveillance périphérique 21 détecte l'ouverture d'interrupteurs électriques liés à des ouvertures du volume surveillé, portes, fenêtres, par exemple. La centrale de traitement 22 traite les informations provenant des circuits 20 et 21 et élimine les détections non vérifiées ou répétées. Enfin, le numéroteur téléphonique 23 et la sirène 24 permettent de transmettre l'alarme.

Le détecteur selon l'invention est adapté à surveiller des automobiles ou des appartements et présente l'avantage qu'il n'est pas nécessaire que le volume soit fermé pour que l'alarme fonctionne.

Le détecteur selon l'invention peut s'adapter facilement à tout dispositif de détection de mouvement à ondes sonores, lumineuses ou électro-magnétiques, puisqu'il mémorise un signal-seuil correspondant à un mouvement considéré comme le plus faible qu'il soit nécessaire de détecter, ce signal-seuil servant de seuil de détection, comme il a été exposé plus haut.

## Revendications

1. Dispositif de détection de mouvements comportant un émetteur (1) et un récepteur (2) d'ondes électromagnétiques émises dans le domaine des hyperfréquences, un démodulateur de variation de fréquence (3) desdites ondes connecté au récepteur (2) et adapté à fournir un signal variable en fonction du mouvement détecté, un circuit intégré (17) incorporant un convertisseur (5) analogique-numérique transformant ledit signal en un signal numérique, une mémoire (6) reliée au convertisseur (5) et un comparateur (8) fonctionnant de manière numérique et connecté d'une part au convertisseur (5) et d'autre part à la mémoire (6), caractérisé en ce qu'il comprend un interrupteur (7) relié à la mémoire (6) et à une masse électrique (18) et permettant, en position fermée, la mémorisation, dans ladite mémoire (6), d'un signal-seuil correspondant à la variation de fréquence provoquée par un mouvement de faible vitesse à proximité du dispositif tandis qu'en position ouverte dudit interrupteur (7) la mémoire (6) émet en permanence l'information mémorisée, le comparateur (8) comparant en permanence le signal -seuil émis par la mémoire (6) avec le signal provenant du démodulateur (3), et émettant un signal d'alarme quand le second est supérieur au premier.

2. Dispositif de détection de mouvements comportant un émetteur (1) et un récepteur (2) d'ondes électromagnétiques émises dans le domaine des hyperfréquences, un démodulateur de variation de fréquence (3) desdites ondes connecté au récepteur (2) et adapté à fournir un signal variable en fonction du mouvement détecté, un circuit intégré (17) incorporant un convertisseur (5) analogique-numérique transformant ledit signal en un signal numérique et une mémoire (6) reliée au convertisseur (5), caractérisé en ce qu'il comprend un comparateur (10), fonctionnant de manière analogique et connecté d'une part à un convertisseur numérique-analogique (9) relié à la mémoire (6), et d'autre part à un amplificateur (4) reliant le démodulateur (3) au convertisseur analogique-numérique (5), et en ce qu'il comprend un interrupteur (7) relié à la mémoire (6) et à une masse électrique (18) et permettant, en position fermée, la mémorisation, dans ladite mémoire (6), d'un signal-seuil correspondant à la variation de fréquence provoquée par un mouvement de faible vitesse à proximité du dispositif tandis qu'en position ouverte dudit interrupteur (7) la mémoire (6) émet en permanence l'information mémorisée, le comparateur (10) comparant en permanence le signal-seuil émis par la mémoire (6) avec le signal provenant du démodulateur (3), et émettant un signal d'alarme quand le second est supérieur au premier.

## Patentansprüche

1. Bewegungsdetektoreinrichtung mit einem Sender (1) und einem Empfänger (2) elektromagnetischer Wellen, die in dem Ultrahochfrequenzbereich gesendet werden, einem Frequenzschwankungsdemodulator (3) für die besagten Wellen, der mit dem Empfänger (2) verbunden und zur Ermittlung eines von der erfaßten Bewegung abhängig veränderlichen Signals geeignet ist, einem integrierten Schaltkreis (17), der einen Analog-Digital-Umsetzer (5) aufweist, der das besagte Signal in ein Digitalsignal umwandelt, einen mit dem Umsetzer (5) verbundenen Speicher (6) und einem im Digitalbetrieb arbeitenden Komparator (8), der einerseits mit dem Umsetzer (5) und anderseits mit dem Speicher (6) verbunden ist, dadurch gekennzeichnet, daß er einen Schalter (7) aufweist, der mit dem Speicher (6) und mit einer elektrischen Masse (18) verbunden und in der geschlossenen Stellung in dem besagten Speicher (6) die Speicherung eines Schwellensignals erlaubt, das der Schwankung der Frequenz entspricht, die durch eine Bewegung geringer Geschwindigkeit in der Nähe der Einrichtung entsteht, während in der offenen Stellung des besagten Schalters (7) der Speicher (6) andauernd die eingespeicherte Angabe sendet, wobei der Komparator (8) andauernd das von dem Speicher (6) abgegebene Schwellensignal mit dem aus dem Demodulator (3) entstehenden Signal vergleicht und ein Alarmsignal sendet, wenn das Zweite das Erste übersteigt.

2. Bewegungsdetektoreinrichtung mit einem Sender (1) und einem Empfänger (2) elektromagnetischer Wellen, die in dem Ultrahochfrequenzbereich gesendet werden, einem Frequenzschwankungsdemodulator (3) für die besagten Wellen, der mit dem Empfänger (2) verbunden und zur Ermittlung eines von der erfaßten Bewegung abhängig veränderlichen Signals geeignet ist, einen integrierten Schaltkreis (17), der einen Analog-Digital-Umsetzer (5) aufweist, der das besagte Signal in ein Digitalsignal umwandelt und einem mit dem Umsetzer (5) verbundenen Speicher (6), dadurch gekennzeichnet, daß er einen im Analogbetrieb arbeitenden Komparator (10) aufweist, der einerseits mit einem mit dem Speicher (6) verbundenen Digital-Analog-Umsetzer (9) und anderseits mit einem Verstärker (4) verbunden ist, der den Demodulator (3) mit dem Analog-Digital-Umsetzer (5) verbindet, und daß er einen Schalter (7) aufweist, der mit dem Speicher (6) und einer elektrischen Masse (18) verbunden ist und in der geschlossenen Stellung in dem besagten Speicher (6) die Speicherung eines Schwellensignals erlaubt, das der Schwankung der Frequenz entspricht, die durch eine Bewegung geringer Geschwindigkeit in der Nähe der Einrichtung entsteht, während in der offenen Stellung des besagten Schalters (7) der Speicher (6) andauernd die eingespeicherte Angabe sendet, wobei der Komparator (10) andauernd das von dem Speicher (6) abgegebene Schwellensignal mit dem aus dem Demodulator (3) entstehenden Signal vergleicht und ein Alarmsignal sendet, wenn das Zweite das Erste übersteigt.

## Claims

1. Movement detection device comprising a transmitter (1) and a receiver (2) for emitting and receiving electromagnetic waves transmitted in a range of ultra-high frequencies, a demodulator (3) for varying the frequency of said waves, connected to the receiver (2) and adapted to provide a signal varying according to the detected movement, an integrated circuit (17) incorporating an analog to digital converter (5) transforming said signal into a digital signal, a memory (6) connected to the converter (5) and a comparator (8) functioning digitally and connected firstly to the converter (5) and secondly to the memory (6), charaterized in that it includes a switch (7) connected to the memory (6) and to an electric earth (18) and allowing, in its closed position, the storing in said memory (6) of a threshold signal corresponding to the frequency variation provoked by a slow speed movement close to the device, whereas in the open position of said switch (7), the memory (6) continuously emits the stored information, the comparator (8) continuously comparing the threshold signal emitted by the memory (6) with the signal coming from the demodulator (3) and emitting an alarm signal when the second one is higher than the first one.

2. Movement detection device comprising an emitter (1) and a receiver (2) for electromagnetic waves emitted in a range of ultra-high frequencies, a demodulator (3) for varying the frequency of said waves, connected to the receiver (2) and adapted to provide a signal varying according to the movement detected, an integrated circuit (17) incorporating an analog to digital converter (5) transforming said signal into a digital signal and a memory (6) connected to the converter (5), characterized in that it includes an analog-functioning comparator (10) connected firstly to a digital to analog converter (9) connected to the memory (6), and secondly to an amplifier (4) connecting the demodulator (3) to the analog to digital converter (5), and in that it includes a switch (7) connected to the memory (6) and to an electric earth (18) allowing, in closed position, the storing in said memory (6) of a threshold signal corresponding to the frequency variation provoked by a slow speed movement close to the device, whereas in the open position of said switch (7), the memory (6) continuously emits the stored information, the comparator (10) continuously comparing the threshold signal emitted by the memory (6) with the signal coming from the demodulator (3) and emitting an alarm signal when the second is higher than the first one.
